(19) Europäisches Patentamt

European Patent Office

Office européen des brevets

(11) Veröffentlichungsnummer: **0 465 899 B1**

(12) **EUROPÄISCHE PATENTSCHRIFT**

(45) Veröffentlichungstag der Patentschrift: **16.08.95**

(21) Anmeldenummer: **91110322.4**

(22) Anmeldetag: **22.06.91**

(51) Int. Cl.⁶: **A01N 43/707**, A01N 43/12, A01N 47/22, //(A01N43/707, 43:12,47:22,25:14),(A01N43/12, 43:707,47:12,25:14), (A01N47/12,43:707)

(54) **Herbizide Mittel auf Basis einer Kombination von Metamitron/Ethofumesat/Phenmedipham/Desmedipham.**

(30) Priorität: **06.07.90 DE 4021604**
**07.05.91 DE 4114801**

(43) Veröffentlichungstag der Anmeldung:
**15.01.92 Patentblatt  92/03**

(45) Bekanntmachung des Hinweises auf die Patenterteilung:
**16.08.95 Patentblatt  95/33**

(84) Benannte Vertragsstaaten:
**AT BE CH DE DK ES FR GB GR IT LI NL SE**

(56) Entgegenhaltungen:
**WO-A-85/01286**
**DE-A- 2 413 262**

**CHEMICAL ABSTRACTS, Band 107, Nr. 17, 26. Oktober 1987, Seite 247, Zusammenfassung NR 149132e, Columbus, Ohio, US; P Karoly.**

**CHEMICAL ABSTRACTS, Band 108, Nr. 19, 9. Mai 1988, Seite 241, ZusammenfassungNr.**

**163177a, Columbus, Ohio, US; J. MARSHALL et al.: "Phenmedipham co-formulations for broad-leaved weed control in sugar beet",& PROC. BR. CROP PROT. CONF.-WEEDS 1987, (1), 233-40**

(73) Patentinhaber: **BAYER AG**

**D-51368 Leverkusen (DE)**

(72) Erfinder: **Wieschollek, Raphael, Dr.**
**Wiesdorfer Platz 10**
**W-5090 Leverkusen (DE)**
Erfinder: **Feucht, Dieter, Dr.**
**Ackerweg 09**
**W-4019 Monheim (DE)**

**Beschreibung**

Die Erfindung betrifft neue feste Fertigformulierungen der bekannten Herbizidwirkstoffe Metamitron + Ethofumesat + (A) Phenmedipham,oder (B) Phenmedipham + Desmedipham oder (C) Desmedipham, bevorzugt Festformulierungen wie wasserdispergierbare Pulver (WP) und wasserdispergierbare Granulate (WG), sowie deren Verwendung als Herbizide, insbesondere als selektive Rübenherbizide.

Mischungen dieser Wirkstoffe sind vorbeschrieben, so auch Tankmischungen aus einer Fertigformulierung von Ethofumesat + Phenmedipham mit Metamitron (vgl. J. Marshall et al, 1987, British Crop Protection Conference Weeds (1), S. 233-240), welche sich in der Praxis für eine selektive Unkrautbekämpfung in Rübenkulturen als geeignet erwiesen haben. Nachteilig bei diesen Tankmischungen ist jedoch, daß die Anwender die flüssige Fertigformulierung von Ethofumesat + Phenmedipham [Handelsbezeichnung: ®BETANAL-TANDEM, Fa. Schering AG; ein Emulsionskonzentrat (EC) mit 94 g/l Ethofumesat und 97 g/l Phenmedipham] oder Ethofumesat + Phenmedipham + Desmedipham [Handelsbezeichnung: ®BETANAL-PROGRESS, Fa. Schering AG, eine Emulsionskonzentrat (EC) mit 128 g/l Ethofumesat, 62 g/l Phenmedipham und 16 g/l Desmedipham] und das feste Metamitron-Präparat [Handelsbezeichnung: ®GOLTIX, Fa. Bayer AG; ein 70 %iges WG] beim Ansetzen der Spritzbrühe mischen müssen.

Für den Anwender wäre deshalb eine feste Fertigformulierung mit einer Kombination dieser Wirkstoffe vorteilhaft. Bisher war jedoch nicht bekannt, in welcher Weise solche festen Fertigpräparate aufgebaut werden können, da im Hinblick auf den relativ niedrigen Ethofumesat-Schmelzpunkt und die evtl. erforderliche Einarbeitung flüssiger Additive besondere Probleme zu erwarten waren.

Es ist nun überraschend gelungen, aus den technischen Wirkstoffen Metamitron und Ethofumesat und
(A) Phenmedipham (III) und
(B) Phenmedipham (III) und Desmedipham (IV) oder (C) Desmedipham (IV),
feste Fertigformulierungen zu erstellen. Teils unter Einbeziehung von flüssigen Emulgatoren konnten feste Kombinationspräparate hergestellt werden. Besonders vorteilhaft für die landwirtschaftliche Praxis sind dabei neue feste Fertigformulierungen in Form von wasserdispergierbaren Granulaten (WG).

Gegenstand der Erfindung sind somit neue herbizide Mittel in Form von festen Fertigformulierungen, enthaltend eine Kombination der Wirkstoffe Metamitron (I) und Ethofumesat (II) und
(A) Phenmedipham (III) oder
(B) Phenmedipham (III) und Desmedipham (IV) oder
(C) Desmedipham (IV),
vorzugsweise in Form wasserdispergierbarer Pulver (WP), oder in Form wasserdispergierbarer Granulate (WG),in Mischung mit Formulierhilfsmitteln, wobei das Gewichtsverhältnis der Wirkstoffe (I):(II):(III) gemäß der Kombination (A) (1):(0,05 bis 1):(0,05 bis 1), vorzugsweise (1):(0,1 bis 0,4):(0,1 bis 0,4) und besonders bevorzugt (1):(0,1 bis 0,35):(0,1 bis 0,3) beträgt, wobei das Gewichtsverhältnis der Wirkstoffe (I):(II):(III):(IV) gemäß der Kombination (B) (1):(0,05 bis 1):(0,05 bis 1):(0,05 bis 1), vorzugsweise (1):(0,1 bis 0,4):(0,1 bis 0,4):(0,1 bis 0,4) und besonders bevorzugt (1):(0,1 bis 0,4):(0,1 bis 0,35):(0,1 bis 0,25) beträgt, wobei das Gewichtsverhältnis der Wirkstoffe (I):(II):(IV) gemäß der Kombination (C) (1):(0,05 bis 1):(0,05 bis 1), vorzugsweise (1):(0,1 bis 0,4):(0,1 bis 0,4) und besonders bevorzugt (1):(0,1 bis 0,4):(0,1 bis 0,3) beträgt und wobei der Gesamtwirkstoffgehalt sowohl für die Kombination (A), d.h. (I) + (II) + (III), als auch für die Kombinationen (B), d.h. (I) + (II) + (III) + (IV), und (C), d.h. (I) + (II) + (IV), zwischen 20 und 75 Gew.-%, vorzugsweise zwischen 30 und 70 Gew.-% liegt.

Bevorzugte Festformulierungen sind wasserdispergierbare Pulver (WP) und wasserdispergierbare Granulate (WG). Besonders bevorzugte Festformulierungen sind wasserdispergierbare Granulate.

Die WP-Formulierungen können - wie gefunden wurde - in überraschend einfacher Weise hergestellt werden, indem man die Wirkstoffe im oben angegebenen Gewichtsverhältnis mit den für eine WP-Formulierung geeigneten Formulierhilfsmitteln mischt, die Mischung (z.B. mit einer üblichen Luftstrahlmühle) mahlt und anschließend durch Nachmischen homogenisiert.

Die WG-Formulierungen werden erhalten, indem man
(a) zunächst aus den Wirkstoffen (I), (II) und (III) bzw. (I), (II), (III) und (IV) bzw (I), (II) und (IV) - in den oben angegebenen Gewichtsverhältnissen - und den für eine WG-Formulierung geeigneten Formulierhilfsmitteln durch Mischen, Mahlen (zweckmäßigerweise mit einer üblichen Luftstrahlmühle) und anschließendes Nachmischen eine Vormischung herstellt,
(b) dann diese Vormischung in üblicher Weise in einem Wirbelschichtgranulator mit Wasser versetzt und anschließend bei einer Zulufttemperatur von 50-90 °C bis zu einer Produkttemperatur von 30-60 °C trocknet und
(c) das gewünschte Granulat (mit Korngrößen zwischen 200 und 1500 $\mu$m) durch Sieben abtrennt, wobei das Unterkorn (< 200 $\mu$m) und das Überkorn (> 1500 $\mu$m) abgetrennt werden.

Eine besondere - kontinuierliche - Ausführungsform des zuletzt beschriebenen Verfahrens zur Herstellung der erfindungsgemäßen WG-Formulierungen besteht darin, wie weiterhin gefunden wurde,

- daß man aus der oben unter (a) beschriebenen Vormischung durch Zugabe von etwa der gleichen Gewichtsmenge Wasser unter kräftigem Rühren eine hochkonzentrierte Suspension herstellt,
- daß man diese Suspension dann in eine spezielle Granulieranlage (wie beschrieben in den - korrespondierenden - Patentdokumenten EP-A-0 163 863 oder DE-A1-3 413 200) einspeist
- und daß bei einer Zulufttemperatur von etwa 100-125°C das gebildete Produkt bei einer Produkttemperatur von 30-60°C kontinuierlich ausgetragen wird.

Das so erhaltene, apparatebedingt sehr einheitliche Produkt (Granulat mit Korngröße von ca. 500 µm) braucht nicht mehr abgesiebt zu werden.

Die Wirkstoffe werden jeweils in Form der technischen Wirktoffe eingesetzt, für welche folgende Schmelzpunkte (Fp.) bestimmt wurden:

Metamitron (I) - Fp. 166°C
[ = 3-Methyl-4-amino-6-phenyl-1,2,4-triazin-5(4H)-on];
Ethofumesat (II) - Fp. 69°C
[ = 2-Ethoxy-2,3-dihydro-3,3-dimethyl-5-benzofuranyl-methansulfonat];
Phenmediphan (III) - Fp. 144°C
[ = 3-Methoxycarbonylaminophenyl-N-(3'-methylphenyl)-carbamat].
Desmedipham (IV) - Fp. 120°C
[ = 3-Ethoxycarbonylaminophenyl-N-phenyl-carbamat].

Alle relevanten technischen Daten für die Wirkstoffe können der einschlägigen Literatur entnommen werden [vgl. z.B. The Pesticide Manual, 8. Ed., published by The British Crop Protection Council, 1987, Seiten 353-354 für (II), Seite 536 für (I), Seiten 652-653 für (III) und Seiten 242-243 für (IV)].

Als Formulierhilfsmittel werden bestimmte Trägerstoffe, Dispergiermittel und gegebenenfalls bestimmte Emulgatoren bzw. Netzmittel benötigt.

Als Trägerstoffe kommen synthetische Gesteinsmehle wie Aluminiumoxid, Silikate oder Kieselsäuren in Verbindung mit natürlichen Gesteinsmehlen wie Kaolinen, Tonerden, Quarz oder Attapulgit in Betracht. Bei den Kieselsäuren haben sich Absorptions- oder Fällungskieselsäuren besonders bewährt.

Als bevorzugte Dispergiermittel werden Ligninsulfonate oder Alkylarylsulfonate verwendet.

Als bevorzugte, als Additiv wirksame Emulgatoren wurden Polyoxyethylenalkylether, Silicontenside oder Polyole eingesetzt, und als Netzmittel können z.B. Kondensationsprodukte von Ethylenoxid mit Phenol eingesetzt werden. Kondensationsprodukte von Ethylenoxid mit Phenol lassen sich auch als Emulgatoren verwenden.

Alle genannten Formulierhilfsmittel sind handelsübliche Produkte.

Die WP-Formulierungen gemäß der Erfindung (Kombination (A) bzw. (C)) weisen vorzugsweise folgende Zusammensetzung auf:

pro 1 Gewichtsteil Metamitron (I):
0,1 - 0,4 Gewichtsteile Ethofumesat (II),
0,1 - 0,4 Gewichtsteile Phenmedipham (III), bzw.
0,1 - 0,4 Gewichtsteile Desmedipham (IV),
0,05 - 0,2 Gewichtsteile Dispergiermittel,
0,0 - 0,3 Gewichtsteile Emulgator,
0,0 - 0,1 Gewichtsteile Netzmittel,
0,1 - 0,3 Gewichtsteile Kieselsäure und
0,05 - 0,2 Gewichtsteile Kaolin.

Die WP-Formulierungen gemäß der Erfindung (Kombination (A)) weisen besonders bevorzugt folgende Zusammensetzung auf:

pro 1 Gewichtsteil Metamitron (I):
0,1 - 0,35 Gewichtsteile Ethofumesat(II),
0,1 - 0,3 Gewichtsteile Phenmedipham (III),
0,05 - 0,2 Gewichtsteile Dispergiermittel,
0,0 - 0,3 Gewichtsteile Emulgator,
0,0 - 0,1 Gewichtsteile Netzmittel,
0,1 - 0,3 Gewichtsteile Kieselsäure und
0,05 - 0,2 Gewichtsteile Kaolin.

Die WP-Formulierungen gemäß der Erfindung (Kombination (C)) weisen besonders bevorzugt folgende Zusammensetzung auf:

pro 1 Gewichtsteil Metamitron (I):

3

EP 0 465 899 B1

0,1 - 0,4 Gewichtsteile Ethofumesat (II),
0,1 - 0,3 Gewichtsteile Desmedipham (IV),
0,05 - 0,2 Gewichtsteile Dispergiermittel,
0,0 - 0,3 Gewichtsteile Emulgator,
0,0 - 0,1 Gewichtsteile Netzmittel,
0,1 - 0,3 Gewichtsteile Kieselsäure und
0,05 - 0,2 Gewichtsteile Kaolin.

Die WP-Formulierungen gemäß der Erfindung (Kombination (B)) weisen vorzugsweise folgende Zusammensetzung auf:

pro 1 Gewichtsteil Metamitron (I):
0,1 - 0,4 Gewichtsteile Ethofumesat (II),
0,1 - 0,4 Gewichtsteile Phenmedipham (III),
0,1 - 0,4 Gewichtsteile Desmedipham (IV),
0,05 - 0,2 Gewichtsteile Dispergiermittel,
0,0 - 0,3 Gewichtsteile Emulgator,
0,0 - 0,1 Gewichtsteile Netzmittel,
0,1 - 0,3 Gewichtsteile Kieselsäure und
0,05 - 0,2 Gewichtsteile Kaolin.

Die WP-Formulierungen gemäß der Erfindung (Kombination (B)) weisen besonders bevorzugt folgende Zusammensetzung auf:

pro 1 Gewichtsteil Metamitron (I):
0,1 - 0,4 Gewichtsteile Ethofumesat (II),
0,1 - 0,35 Gewichtsteile Phenmedipham (III),
0,1 - 0,25 Gewichtsteile Desmedipham (IV),
0,05 - 0,2 Gewichtsteile Dispergiermittel,
0,0 - 0,3 Gewichtsteile Emulgator,
0,0 - 0,1 Gewichtsteile Netzmittel,
0,1 - 0,3 Gewichtsteile Kieselsäure und
0,05 - 0,2 Gewichtsteile Kaolin.

Die WG-Formulierungen gemäß der Erfindung (Kombination (A) bzw. (C)) weisen vorzugsweise folgende Zusammensetzung auf:

pro 1 Gewichtsteil Metamitron (I):
0,1 - 0,4 Gewichtsteile Ethofumesat (I),
0,1 - 0,4 Gewichtsteile Phenmedipham (III), bzw.
0,1 - 0,4 Gewichtsteile Desmedipham (IV),
0,2 - 0,5 Gewichtsteile Dispergiermittel,
0,0 - 0,3 Gewichtsteile Emulgator,
0,1 - 0,3 Gewichtsteile Kieselsäure und
0,0 - 0,2 Gewichtsteile Kaolin.

Die WG-Formulierungen gemäß der Erfindung (Kombination (A)) weisen besonders bevorzugt folgende Zusammensetzung auf:

pro 1 Gewichtsteil Metamitron (I):
0,1 - 0,35 Gewichtsteile Ethofumesat (II),
0,1 - 0,3 Gewichtsteile Phenmedipham (III),
0,2 - 0,5 Gewichtsteile Dispergiermittel,
0,0 - 0,3 Gewichtsteile Emulgator,
0,1 - 0,3 Gewichtsteile Kieselsäure und
0,0 - 0,2 Gewichtsteile Kaolin.

Die WG-Formulierungen gemäß der Erfindung (Kombination (C)) weisen besonders bevorzugt folgende Zusammensetzung auf:

pro 1 Gewichtsteil Metamitron (I):
0,1 - 0,4 Gewichtsteile Ethofumesat (II),
0,1 - 0,3 Gewichtsteile Desmedipham (IV),
0,2 - 0,5 Gewichtsteile Dispergiermittel,
0,0 - 0,3 Gewichtsteile Emulgator,
0,1 - 0,3 Gewichtsteile Kieselsäure und
0,0 - 0,2 Gewichtsteile Kaolin.

EP 0 465 899 B1

Die WG-Formulierungen gemäß der Erfindung (Kombination (B)) weisen vorzugsweise folgende Zusammensetzung auf:

pro 1 Gewichtsteil Metamitron (I):

0,1 - 0,4 Gewichtsteile Ethofumesat (II),

0,1 - 0,4 Gewichtsteile Phenmedipham (III),

0,1 - 0,4 Gewichtsteile Desmedipham (IV),

0,2 - 0,5 Gewichtsteile Dispergiermittel,

0,0 - 0,3 Gewichtsteile Emulgator,

0,1 - 0,3 Gewichtsteile Kieselsäure und

0,0 - 0,2 Gewichtsteile Kaolin.

Die WG-Formulierungen gemäß der Erfindung (Kombination (B)) weisen besonders bevorzugt folgende Zusammensetzung auf:

pro 1 Gewichtsteil Metamitron (I):

0,1 - 0,4 Gewichtsteile Ethofumesat (II),

0,1 - 0,35 Gewichtsteile Phenmedipham (III),

0,1 - 0,25 Gewichtsteile Desmedipham (IV),

0,2 - 0,5 Gewichtsteile Dispergiermittel,

0,0 - 0,3 Gewichtsteile Emulgator,

0,1 - 0,3 Gewichtsteile Kieselsäure und

0,0 - 0,2 Gewichtsteile Kaolin.

Wegen weiterer Einzelheiten wird auf die Herstellungsbeispiele verwiesen.

Im Hinblick auf technische Schwierigkeiten grundsätzlicher Art, die bei der Herstellung der neuen festen Fertigformulierungen, vor allem der wasserdispergierbaren Granulate, zu überwinden waren, müssen die erzielten Ergebnisse als überraschend bezeichnet werden:

Normalerweise bereitet die Herstellung einer gemahlenen Mischung des Wirkstoffes Ethofumesat wegen des niedrigen Schmelzpunktes von ca. 69°C Schwierigkeiten. In einer Luftstrahlmühle kommt es zu Düsenverstopfungen oder zu Anbackungen in der Mahlkammer. Der Wirkstoff wird bisher nur als Flüssigformulierung vermarktet. In den hier beschriebenen Mischungen kann der Wirkstoff Ethofumesat in den Kombinationen (A), (B) und (C) jedoch ohne Probleme gemahlen werden. Die Mahlbarkeit der Herbizidmischung bleibt vor allen Dingen auch dann erhalten, wenn zusätzlich zu den Wirkstoffen ein flüssiger Emulgator bis zu einem Gehalt von etwa 10 % in der Formulierung zum Einsatz kommt.

Die Granulation eines niedrig schmelzenden Wirkstoffes ist im allgemeinen problematisch. Überraschenderweise kann die Vormischung mit den Wirkstoffen jedoch ohne nennenswerte Probleme granuliert werden. Die Vormischung läßt sich überraschenderweise auch dann granulieren, wenn in ihr ein flüssiger Emulgator enthalten ist.

Das erhaltene Granulat redispergiert vollständig, obwohl bis zu etwa 10 % hochdisperse Kieselsäure eingearbeitet werden. Normalerweise redispergiert dieser Kieselsäureanteil nach Granulation nicht vollständig.

Überraschenderweise läßt sich die gleiche Vormischung mit den üblichen Verfahren, vorzugsweise mit einem Pulver-Prozeß, wie z.B. der Wirbelschichtgranulation, oder mit einem sogenannten "Slurry"-Prozeß, wie z.B. der Sprühtrocknung, granulieren. ("Slurry" bedeutet "konzentrierte wäßrige Suspension").

Überraschenderweise kann die (Vor-)Mischung auch dann gemahlen und gegebenenfalls anschließend granuliert werden, wenn der flüssige Emulgator mit dem Wirkstoff Metamitron (I) bei 160°C ohne Wirkstoffabbau zuvor zusammengeschmolzen wird.

Weiterhin wurde gefunden, daß die festen Fertigformulierungen gemäß der Erfindung, insbesondere auch die neuen WG-Formulierungen, für eine selektive Unkrautbekämpfung insbesondere in Rübenkulturen ausgezeichnet geeignet sind.

Die neuen festen Fertigformulierungen erweisen sich als praxisgerechte, breit wirksame Präparate hoher Qualität zur Bekämpfung dikotyler und monokotyler Schadpflanzen einschließlich Problemunkräuter wie Mercurialis annua und Galium aparine in Rübenkulturen.

Überraschenderweise hat sich bei entsprechenden Vergleichsversuchen gezeigt, daß die erfindungsgemäßen WG-Formulierungen den bekannten Tankmischungen teils in der Wirkung und teils in der Verträglichkeit überlegen sind und somit gegenüber dem Stand der Technik zusätzliche Vorteile bieten.

Darüberhinaus können die neuen festen Fertigformulierungen auch als Selektivherbizide in Kulturen von Beta-Rüben, Erdbeeren, Mangold, Spinat und weiteren Obst- und Gemüsekulturen eingesetzt werden.

Als weitere typische Unkräuter, die in den genannten Kulturen auftreten können und mit den erfindungsgemäßen Mitteln gut bekämpft werden können, sind die folgenden zu nennen:

Dikotyle Unkräuter der Gattungen: Sinapis, Lepidium, Stellaria, Matricaria, Anthemis, Galinsoga, Chenopodi-

5

um, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Taraxacum.

Monokotyle Unkräuter der Gattungen: Echinochioa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.

Die Wirkstoff-Aufwandmengen entsprechen den bei Anwendung der vorbekannten Tankmischungen in der Praxis ausgebrachten Wirkstoffmengen, jeweils bezogen auf die gleiche Flächeneinheit.

Für den Anwender in der landwirtschaftlichen Praxis ist es von besonderer Bedeutung, daß die neuen WG-Formulierungen gegenüber anderen Formulierungen der gleichen Wirkstoffe wesentliche technische Vorteile aufweisen:

so ist die Verpackung einfacher (ohne Rückstände entleerbar und damit problemlos zu entsorgen, bei deutlich verringerter Menge an Verpackungsmaterial); die Granulate sind volumendosierbar, und es gibt keine Staubentwicklung oder Verspritzen des Konzentrats beim Ansetzen der Spritzbrühen; gegenüber den bekannten Emulsionskonzentraten (EC) sind die neuen festen Formulierungen völlig lösungsmittelfrei.

Die Wirkung eines über die Blätter wirkenden herbiziden Mittels kann durch Zugabe eines Emulgators gesteigert werden. Ein solches Additiv wird üblicherweise in einer Tankmischung in großen Mengen hinzugefügt. Überraschenderweise genügt zur Erzielung einer Wirkungssteigerung der hier beschriebenen Präparate nur ein kleiner Anteil von etwa 5-10 % des hier eingesetzten Emulgators in der erfindungsgemäßen festen Fertigformulierung.

Die nachfolgenden Herstellungs- und Anwendungsbeispiele dienen zur weiteren Erläuterung der Erfindung.

A) Herstellungsbeispiele

Beispiele für die Herstellung der erfindungsgemäßen WG-Fertigformulierungen aus Metamitron & Ethofumesat & Phenmedipham.

Aus den in der nachfolgenden Tabelle 1 aufgeführten Bestandteilen wurde durch Mischen, Mahlen mit einer Luftstrahlmühle und anschließendes Nachmischen eine Vormischung hergestellt.

Jede dieser Vormischungen wurde in üblicher weise in einem Wirbelschichtgranulator der Firma Aeromatik (Strea 1) mit Wasser versetzt und anschließend bei einer Zulufttemperatur von 68 °C bis zu einer Produkttemperatur von 40 °C getrocknet. Von dem erhaltenen Produkt wurde anschließend das Unterkom (< 200 $\mu$m) und das Überkorn abgesiebt (> 1500 $\mu$m).

Bei Herstellung der Formulierungen WG-3, WG-5 und WG-7 wurde jeweils mit 3,0 kg Vormischung und 3,0 l Wasser eine Suspension hergestellt. Diese Suspension wurde in eine im Patent-Dokument DE-A-3 413 200 bzw. EP-A-0 163 863 beschriebene Anlage eingespeist. Bei einer Zulufttemperatur von 110 °C wurde kontinuierlich das Produkt bei einer Produkttemperatur von 40 °C ausgetragen. Das erhaltene Produkt, ca. 500 $\mu$m große Granulate, mußte apparatebedingt nicht mehr abgesiebt werden.

In den in Tabelle 1 beschriebenen WG-Formulierongen ist das Gewichtsverhältnis der Wirkstoffe

(I):(II):(III) = 1:0,132:0,136 für WG 1 bis 10

(I):(II):(III) = 1:0,270:0,279 für WG 11.

Tabelle 1: Zusammensetzung der hergestellten WG-Formulierungen

| Formulierung Nr. | Wirkstoff[1] | | | Dispergiermittel[2] | Emulgator[3] | Trägerstoffe[4] | | |
|---|---|---|---|---|---|---|---|---|
| | (I) [%] | (II) [%] | (III) [%] | [%] | [%] | Kieselsäure [%] | | Kaolin [%] |
| WG-1 | 50.0 | 6.60 | 6.80 | 20.0 | 0.0 | 5.0 | ca. | 11.6 |
| WG-2 | 50.0 | 6.60 | 6.80 | 20.0 | 5.0 | 7.5 | ca. | 4.10 |
| WG-3 | 50.0 | 6.60 | 6.80 | 20.0 | 5.0 | 7.5 | ca. | 4.10 |
| WG-4 | 45.0 | 5.94 | 6.12 | 20.0 | 7.5 | 7.5 | ca. | 7.94 |
| WG-5 | 45.0 | 5.94 | 6.12 | 20.0 | 7.5 | 7.5 | ca. | 7.94 |
| WG-6 | 45.0 | 5.94 | 6.12 | 20.0 | 10.0 | 10.0 | ca. | 2.94 |
| WG-7 | 45.0 | 5.94 | 6.12 | 20.0 | 10.0 | 10.0 | ca. | 2.94 |
| WG-8[5] | 45.0 | 5.94 | 6.12 | 20.0 | 10.0 | 10.0 | ca. | 2.94 |
| WG-9 | 50.0 | 6.60 | 6.80 | 20.0 | 7.0 | 7.0 | ca. | 2.60 |
| WG-10[6] | 50.0 | 6.60 | 6.80 | 20.0 | 7.0 | ca.9.6 | | 0.0 |
| WG-11 | 23.3 | 6.30 | 6.50 | 15.0 | 5.0 | 5.0 | | 38.9 |

Anmerkungen:

1) Wirkstoff (I) = Metamitron technisch

Wirkstoff (II) = Ethofumesat technisch

Wirkstoff (III) = Phenmedipham technisch

2) Dispergiermittel: Alkylarylsulfonat

3) Emulgator: Polyoxyethylen-(6)-tridecylether

Bei den einen Emulgator enthaltenden Präparaten wurde auf einem üblichen "Pulverizer" eine 50 %ige Vormischung auf Kieselsäure hergestellt.

4) Trägerstoffe: hochdisperse Fällungskieselsäure + Kaolin W

5) Es wurde der Anteil des Wirkstoffes Metamitron (I) mit dem Anteil Emulgator bei ca. 160°C zusammengeschmolzen und abgekühlt. Die wachsartige Masse wurde mit Kieselsäure abgemischt.

6) Es wurden 60 % Emulgator mit 40 % Kieselsäure als Vormischung eingesetzt; diese Vormischung wurde durch Vermischen beider Bestandteile hergestellt. Kaolin wurde nicht zugesetzt.

B) Anwendungsbeispiele

in den Versuchen verwendete Präparate:

(a) gemäß dem Stand der Technik - (Tank-)Mischung Vergleichsmittel aus
®GOLTIX/Metamitron (I), Fa. Bayer AG, 70 %ige WG-Formulierung;
®TRAMAT/Ethofumesat (II), Fa. Schering AG, Flüssigformulierung, Wirkstoffgehalt 200 g/l;
®BETANAL/Phenmedipham (III), Fa. Schering AG, EC-Formulierung, Wirkstoffgehalt 157 g/l.
(b) gemäß der Erfindung -
die in den Herstellungsbeispielen beschriebenen WG-Fertigformulierungen WG-1 bis WG-10 aus Metamitron & Ethofumesat & Phenmedipham.

Durchführung der Versuche:

Herstellung der Wirkstoffzubereitungen: Von den Formulierungen der Präparate werden die benötigten Mengen abgewogen bzw. abgemessen und mit Wasser zu Spritzbrühen aufbereitet.

Nachlaufverfahren: Testpflanzen werden im Gewächshaus unter kontrollierten Bedingungen (Einheitserde/Normalerde, Temperatur, Feuchte, Licht) bis zu einer Größe von 5 bis 10 cm angezogen und dann in einer Spritzkabine mit den Herbiziden behandelt.

Die Konzentration der Spritzbrühen ist so gewählt, daß die jeweils gewünschten Wirkstoffmengen pro Flächeneinheit mit einer Wasseraufwandmenge von 500 l/ha ausgebracht werden.

Nach der Behandlung werden die Versuchsgefäße mit den Versuchspflanzen im Gewächshaus bis zur Auswertung gehalten. Zwei bis drei Wochen nach Behandlung wird der Schädigungsgrad der Pflanzen in % Schädigung im Vergleich zu unbehandelten Kontrollpflanzen bonitiert.

Es bedeuten:

0 = keine Wirkung/Schädigung (wie unbehandelte Kontrolle)

100 = vollständige Bekämpfung/Schädigung

Formulierungen, Aufwandmengen, Testpflanzen und Wirkungen gehen aus den nachfolgenden Tabellen A-G hervor.

In den Tabellen verwendete Abkürzungen:

| WST | = Wirkstoff |
| BEAVA | = Beta vulgaris (Rüben) |
| AMARE | = Amaranthus retroflexus |
| GALAP | = Galium aparine |
| MATIN | = Matricaria inodora |
| MERAN | = Mercurialis annua |
| POLCO | = Polygonum convolvulus |
| SINAL | = Sinapis alba |

Tabelle A-1

Nachauflauf-Test/Gewächshaus (Einheitserde)

| Formulierung*) | Aufwandmenge g/ha WST | Testpflanzen Schädigung bzw. Wirkung in % | |
|---|---|---|---|
| | | BEAVA | AMARE |
| (a) gemäß dem Stand der Technik (Tank-)Mischung: Metamitron +Ethofumesat +Phenmedipham | 2000+264+272 | 0 | 70 |
| (b) gemäß der Erfindung: WG-2 Metamitron & Ethofumesat & Phenmedipham | 2000&264&272 | 0 | 100 |
| WG-4 Metamitron & Ethofumesat & Phenmedipham | 2000&264&272 | 0 | 90 |
| WG-7 Metamitron & Ethofumesat & Phenmedipham | 2000&264&272 | 0 | 90 |

*) bezüglich (b) vgl. jeweils die Herstellungsbeispiele (gilt für alle Tabellen A-F).

EP 0 465 899 B1

EP 0 465 899 B1

Tabelle A-2

Nachauflauf-Test/Gewächshaus (Normalerde)

| Formulierung*) | Aufwandmenge g/ha WST | Testpflanzen Schädigung bzw. Wirkung in % | |
|---|---|---|---|
| | | BEAVA | AMARE |
| (a) gemäß dem Stand der Technik (Tank-)Mischung: Metamitron +Ethofumesat +Phenmedipham | 500+66+68 | 0 | 80 |
| (b) gemäß der Erfindung: | | | |
| WG-1 Metamitron & Ethofumesat & Phenmedipham | 500&66&68 | 0 | 100 |
| WG-2 Metamitron & Ethofumesat & Phenmedipham | 500&66&68 | 10 | 100 |

Tabelle A-2 (Fortsetzung )

Nachauflauf-Test/Gewächshaus (Normalerde)

| Formulierung[*) | Aufwandmenge g/ha WST | Testpflanzen Schädigung bzw. Wirkung in % | |
|---|---|---|---|
| | | BEAVA | AMARE |
| (b) gemäß der Erfindung: | | | |
| WG-7 Metamitron & Ethofumesat & Phenmedipham | 500&66&68 | 0 | 100 |
| WG-8 Metamitron & Ethofumesat & Phenmedipham | 500&66&68 | 0 | 90 |

EP 0 465 899 B1

Tabelle B

Nachauflauf-Test/Gewächshaus (Normalerde)

| Formulierung*) | Aufwandmenge g/ha WST | Testpflanzen Schädigung bzw. Wirkung in % | |
|---|---|---|---|
| | | BEAVA | GALAP |
| (a) gemäß dem Stand der Technik (Tank-)Mischung: Metamitron +Ethofumesat +Phenmedipham | 1000+132+136 | 10 | 80 |
| (b) gemäß der Erfindung: | | | |
| WG-8 | | | |
| Metamitron &Ethofumesat &Phenmedipham | 1000&132&136 | 10 | 98 |

EP 0 465 899 B1

Tabelle C

Nachauflauf-Test/Gewächshaus  (Einheitserde)

| Formulierung[*) | Aufwandmenge g/ha WST | Testpflanzen Schädigung bzw. Wirkung in % | |
|---|---|---|---|
| | | BEAVA | MATIN |
| (a)  gemäß dem Stand der Technik (Tank-)Mischung: Metamitron +Ethofumesat +Phenmedipham | 4000+528+544 | 20 | 90 |
| (b)  gemäß der Erfindung: | | | |
| WG-1 Metamitron & Ethofumesat & Phenmedipham | 4000&528&544 | 10 | 100 |

EP 0 465 899 B1

## Tabelle D

Nachauflauf-Test/Gewächshaus (Einheitserde)

| Formulierung*) | Aufwandmenge g/ha WST | Testpflanzen Schädigung bzw. Wirkung in % | |
|---|---|---|---|
| | | BEAVA | MERAN |
| (a) gemäß dem Stand der Technik (Tank-)Mischung: Metamitron +Ethofumesat +Phenmedipham | 4000+528+544 | 20 | 90 |
| (b) gemäß der Erfindung: | | | |
| WG-3 | | | |
| Metamitron &Ethofumesat &Phenmedipham | 4000&528&544 | 0 | 90 |

EP 0 465 899 B1

Tabelle E-1

Nachauflauf-Test/Gewächshaus (Einheitserde)

| Formulierung[*] | Aufwandmenge g/ha WST | Testpflanzen Schädigung bzw. Wirkung in % | |
| --- | --- | --- | --- |
| | | BEAVA | POLCO |
| (a) gemäß dem Stand der Technik (Tank-)Mischung: Metamitron +Ethofumesat +Phenmedipham | 4000+528+544 | 20 | 80 |
| (b) gemäß der Erfindung: | | | |
| WG-5 Metamitron & Ethofumesat & Phenmedipham | 4000&528&544 | 0 | 90 |
| WG-6 Metamitron & Ethofumesat & Phenmedipham | 4000&528&544 | 10 | 100 |

EP 0 465 899 B1

Tabelle E-2

Nachauflauf-Test/Gewächshaus (Normalerde)

| Formulierung*) | Aufwandmenge g/ha WST | Testpflanzen Schädigung bzw. Wirkung in % | |
|---|---|---|---|
| | | BEAVA | POLCO |
| (a) gemäß dem Stand der Technik (Tank-)Mischung: Metamitron +Ethofumesat +Phenmedipham | 2000+264+272 | 10 | 90 |
| (b) gemäß der Erfindung: | | | |
| WG-9 Metamitron & Ethofumesat & Phenmedipham | 2000&264&272 | 0 | 100 |
| WG-10 Metamitron & Ethofumesat & Phenmedipham | 2000&264&272 | 0 | 100 |

EP 0 465 899 B1

## Tabelle F

### Nachauflauf-Test/Gewächshaus (Einheitserde)

| Formulierung*) | Aufwandmenge g/ha WST | Testpflanzen Schädigung bzw. Wirkung in % | |
|---|---|---|---|
| | | BEAVA | SINAL |
| (a) gemäß dem Stand der Technik (Tank-)Mischung: Metamitron +Ethofumesat +Phenmedipham | 4000+528+544 | 20 | 90 |
| (b) gemäß der Erfindung: WG-5 Metamitron & Ethofumesat & Phenmedipham | 4000&528&544 | 0 | 90 |

## Patentansprüche

1. Herbizide Mittel in Form von festen Fertigformulierungen enthaltend eine Kombination der Wirkstoffe Metamitron (I) und Ethofumesat (II) und
   (A) Phenmedipham (III) oder
   (B) Phenmedipham (III) und Desmedipham (IV) oder
   (C) Desmedipham (IV)
   in Mischung mit Formulierhilfsmitteln,
   wobei das Gewichtsverhältnis der Wirkstoffe (I):(II):(III) gemäß Kombination (A) (1):(0,05 bis 1):(0,05 bis 1),

wobei das Gewichtsverhältnis der Wirkstoffe (I):(II):(III):(IV) gemäß Kombination (B) (1):(0,05 bis 1):(0,05 bis 1):(0,05 bis 1) und

wobei das Gewichtsverhältnis der Wirkstoffe (I):(II):(IV) gemäß Kombination (C) (1):(0,05 bis 1):(0,05 bis 1) beträgt und wobei der Gesamtwirkstoffgehalt in den Kombinationen (A), (B) und (C) zwischen 20 und 75 Gew.-% liegt.

2. Herbizide Mittel gemäß Anspruch 1, wobei das Gewichtsverhältnis der Wirkstoffe (I):(II):(III) (1):(0,1 bis 0,4):(0,1 bis 0,4), der Wirkstoffe (I):(II):(III):(IV) (1):(0,1 bis 0,4):(0,1 bis 0,4):(0,1 bis 0,4) und der Wirkstoffe (I):(II):(IV) (1):(0,1 bis 0,4):(0,1 bis 0,4) beträgt.

3. Herbizide Mittel gemäß Anspruch 1, wobei das Gewichtsverhältnis der Wirkstoffe (I):(II):(III) (1):(0,1 bis 0,35):(0,1 bis 0,3), der Wirkstoffe (I):(II):(III):(IV) (1):(0,1 bis 0,4):(0,1 bis 0,35):(0,1 bis 0,25) und der Wirkstoffe (I):(II):(IV) (1):(0,1 bis 0,4):(0,1 bis 0,3) beträgt.

4. Herbizide Mittel gemäß Anspruch 1, wobei der Gesamtwirkstoffgehalt in den Kombinationen (A), (B) und (C) zwischen 30 und 70 % liegt.

5. Feste Fertigformulierungen gemäß Anspruch 1, wobei als Fomulierhilfsmittel Trägerstoffe, Dispergiermittel und gegebenenfalls ein Emulgator und/oder ein Netzmittel eingesetzt werden.

6. Feste Fertigformulierungen gemäß Anspruch 1 in Form von wasserdispergierbaren Granulaten.

7. Feste Fertigformulierungen gemäß Anspruch 1 in Form von wasserdispergierbaren Pulvern.

8. Feste Fertigformulierungen gemäß den Ansprüchen 1 und 7 in Form von wasserdispergierbaren Pulvern (WP), wobei auf 1 Gewichtsteil Metamitron (I) zusätzlich folgende Formulierhilfsmittel eingesetzt werden:
0,05 - 0,2 Gewichtsteile Dispergiermittel
0,0 - 0,3 Gewichtsteile Emulgator,
0,0 - 0,1 Gewichtsteile Netzmittel,
0,1 - 0,3 Gewichtsteile Kieselsäure und
0,05 - 0,2 Gewichtsteile Kaolin.

9. Feste Fertigformulierungen gemäß den Ansprüchen 1 und 6 in Form eines wasserdispergierbaren Granulats (WG), wobei auf 1 Gewichtsteil Metamitron (I) zusätzlich folgende Formulierhilfsmittel eingesetzt werden:
0,2 - 0,5 Gewichtsteile Dispergiermittel,
0,0 - 0,3 Gewichtsteile Emulgator,
0,1 - 0,3 Gewichtsteile Kieselsäure und
0,0 - 0,2 Gewichtsteile Kaolin.

10. Verfahren zur Herstellung von Fertigformulierungen in fester Form gemäß Anspruch 1, wobei man WP (wasserdispergierbare Pulver)-Formulierungen erhält, wenn man die Wirkstoffe gemäß dem in Anspruch 1 angegebenen Gewichtsverhältnis mit den Formulierhilfsmitteln mischt, die Mischung mahlt und anschließend durch Nachmischen homogenisiert oder wobei man WG (wasserdispergierbare Granulat)-Formulierungen erhält, wenn man

(a) zunächst aus den Wirkstoffen (I), (II) und (III) bzw. (I), (II), (III) und (IV) bzw. (I), (II) und (IV) - gemäß den in Anspruch 1 angegebenen Gewichtsverhältnissen - und den für eine WG-Formulierung geeigneten Formulierhilfsmitteln durch Mischen, Mahlen und anschließendes Nachmischen eine Vormischung herstellt,

(b) dann diese Vormischung in einem Wirbelschichtgranulator mit Wasser versetzt und anschließend bei einer Zulufttemperatur von 50-90°C bis zu einer Produkttemperatur von 30-60°C trocknet und

(c) das gewünschte Granulat (mit Korngrößen zwischen 200 und 1500 $\mu$m) durch Sieben abtrennt, wobei das Unterkom (< 200 $\mu$m) und das Überkorn (> 1500 $\mu$m) abgetrennt werden.

11. Verwendung der festen Fertigformulierungen gemäß den Ansprüchen 1-9 als Herbizide.

12. Verwendung der festen Fertigformulierungen gemäß Anspruch 11 als selektive Rübenherbizide.

EP 0 465 899 B1

**Claims**

1. Herbicidal agents in the form of solid finished formulations, containing a combination of the active compounds

   metamitron (I) and ethofumesate (II) and
   (A) phenmedipham (III) or
   (B) phenmedipham (III) and desmedipham (IV) or
   (C) desmedipham (IV),
   in a mixture with formulation auxiliaries,
   the ratio by weight of the active compounds (I):(II):(III) according to combination (A) being (1):(0.05 to 1):(0.05 to 1),
   the ratio by weight of the active compounds (I):(II):(III):(IV) according to combination (B) being (1):(0.05 to 1):(0.05 to 1):(0.05 to 1) and
   the ratio by weight of the active compounds (I):(II):(IV) according to combination (C) being (1):(0.05 to 1):(0.05 to 1), and the total active compound content in the combinations (A), (B) and (C) being between 20 and 75 % by weight.

2. Herbicidal agents according to Claim 1, the ratio by weight of the active compounds (I):(II):(III) being (1):(0.1 to 0.4):(0.1 to 0.4), of the active compounds (I):(II):(III):(IV) being (1):(0.1 to 0.4):(0.1 to 0.4):(0.1 to 0.4), and of the active compounds (I):(II):(IV) being (1):(0.1 to 0.4):(0.1 to 0.4).

3. Herbicidal agents according to Claim 1, the ratio by weight of the active compounds (I):(II):(III) being (1):(0.1 to 0.35):(0.1 to 0.3), of the active compounds (I):(II):(III):(IV) being (1):(0.1 to 0.4):(0.1 to 0.35):(0.1 to 0.25), and of the active compounds (I):(II):(IV) being (1):(0.1 to 0.4):(0.1 to 0.3).

4. Herbicidal agents according to Claim 1, the total active compound content in the combinations (A), (B) and (C) being between 30 and 70 %.

5. Solid finished formulations according to Claim 1, carriers, dispersants and, if appropriate, an emulsifier and/or a wetting agent being employed as formulation auxiliaries.

6. Solid finished formulations according to Claim 1 in the form of water-dispersible granules.

7. Solid finished formulations according to Claim 1 in the form of water-dispersible powders.

8. Solid finished formulations according to Claims 1 and 7 in the form of water-dispersible powders (WP), the following formulation auxiliaries additionally being employed per part by weight of metamitron (I):
   0.05 - 0.2 parts by weight of dispersant,
   0.0 - 0.3 parts by weight of emulsifier,
   0.0 - 0.1 parts by weight of wetting agent,
   0.1 - 0.3 parts by weight of silica and
   0.05 - 0.2 parts by weight of kaolin.

9. Solid finished formulations according to Claims 1 and 6 in the form of water-dispersible granules (WG), the following formulation auxiliaries additionally being employed per part by weight of metamitron (I):
   0.2 - 0.5 parts by weight of dispersant,
   0.0 - 0.3 parts by weight of emulsifier,
   0.1 - 0.3 parts by weight of silica and
   0.0 - 0.2 parts by weight of kaolin.

10. Process for the preparation of finished formulations in solid form according to Claim 1, in which WP (water-dispersible powder) formulations are obtained when the active compounds are mixed with the formulation auxiliaries following the ratio by weight indicated in Claim 1, and the mixture is ground and subsequently homogenised by remixing, or in which the WG (water-dispersible granules) formulations are obtained by
    (a) first preparing a premix from the active compounds (I), (II) and (III) or (I), (II), (III) and (IV) or (I), (II) and (IV) - according to the ratios by weight given in Claim 1 -and the formulation auxiliaries which are suitable for a WG formulation by mixing, grinding, followed by remixing,

(b) then treating this premix with water in a fluidised-bed granulator in a customary manner, followed by drying at an inlet air temperature of 50-90°C to a product temperature of 30-60°C, and

(c) separating the desired granules (having particle sizes between 200 and 1500 $\mu$m) by sieving, the too small particles (<200 $\mu$m) and the too large particles (>1500 $\mu$m) being separated off.

11. Use of the solid finished formulations according to Claims 1-9 as herbicides.

12. Use of the solid finished formulations according to Claim 11 as selective beet herbicides.

**Revendications**

1. Compositions herbicides sous forme de formulations solides prêtes à l'emploi, contenant une combinaison des substances actives

métamitron(I) et éthofumésate(II) et

(A) phenmédiphame(III) ou

(B) phenmédiphame(III) et desmédiphame(IV) ou

(C) desmédiphame(IV)

en mélange avec des substances auxiliaires de formulation,

les proportions en poids des substances actives (I):(II):(III) selon la combinaison (A) s'élevant à (1):(0,05 à 1):(0,05 à 1),

les proportions en poids des substances actives (I):(II):(III):(IV) selon la combinaison (B) s'élevant à (1):(0,05 à 1):(0,05 à 1):(0,05 à 1) et

les proportions en poids des substances actives (I):(II):(IV) selon la combinaison (C) s'élevant à (1):(0,05 à 1):(0,05 à 1) et la teneur totale en substances actives dans les combinaisons (A), (B) et (C) se situant entre 20 et 75 % en poids.

2. Compositions herbicides suivant la revendication 1, dans lesquelles les proportions en poids des substances actives (I):(II):(III) s'élevant à (1):(0,1 à 0,4):(0,1 à 0,4), celles des substances actives (I):(II):(III):(IV) s'élevant à (1):(0,1 à 0,4):(0,1 à 0,4):(0,1 à 0,4) et celles des substances actives (I):(II):(IV) s'élevant à (1):(0,1 à 0,4):(0,1 à 0,4).

3. Compositions herbicides suivant la revendication 1, dans lesquelles les proportions en poids des substances actives (I):(II):(III) s'élèvent à (1):(0,1 à 0,35):(0,1 à 0,3), celles des substances actives (I):(II):(III):(IV) s'élèvent à (1):(0,1 à 0,4):(0,1 à 0,35):(0,1 à 0,25) et celles des substances actives (I):(II):(IV) s'élèvent à (1):(0,1 à 0,4):(0,1 à 0,3).

4. Compositions herbicides suivant la revendication 1, dans lesquelles la teneur totale en substances actives des combinaisons (A), (B) et (C) se situe entre 30 et 70 %.

5. Formulations solides prêtes à l'emploi suivant la revendication 1, dans lesquelles on utilise comme substances auxiliaires de formulation des supports, des dispersants et le cas échéant un émulsionnant et/ou un agent mouillant.

6. Formulations solides prêtes à l'emploi suivant la revendication 1, sous forme de granulés dispersables dans l'eau.

7. Formulations solides prêtes à l'emploi suivant la revendication 1, sous forme de poudres dispersables dans l'eau.

8. Formulations solides prêtes à l'emploi suivant les revendications 1 et 7, sous forme de poudres dispersables dans l'eau (PE), et pour lesquelles on utilise en outre, par partie en poids de métamitron-(I), les substances auxiliaires de formulation suivantes :

0,05 - 0,2 partie en poids d'agent dispersant

0,0 - 0,3 partie en poids d'émulsionnant

0,0 - 0,1 partie en poids d'agent mouillant

0,1 - 0,3 partie en poids de silice et

0,05 - 0,2 partie en poids de kaolin.

9. Formulations solides prêtes à l'emploi suivant les revendications 1 et 6, sous forme d'un granulé dispersable dans l'eau (GE), pour lesquelles on utilise en outre par partie en poids de métamitron(I) les substances auxiliaires de formulation suivantes :

   0,2 - 0,5 partie en poids d'agent dispersant

   0,0 - 0,3 partie en poids d'émulsionnant

   0,1 - 0,3 partie en poids de silice et

   0,0 - 0,2 partie en poids de kaolin.

10. Procédé de préparation de formulations prêtes à l'emploi sous la forme solide suivant la revendication 1, dans lequel on obtient des formulations PE (poudres dispersables dans l'eau) lorsqu'on malaxe les substances actives conformément aux proportions en poids indiquées dans la revendication 1 avec les substances auxiliaires de formulation, on broie le mélange puis l'homogénéise par un malaxage ultérieur, ou bien

    on obtient des formulations GE (granulés dispersables dans l'eau)

    (a) en préparant tout d'abord un prémélange des substances actives (I),(II) et (III) ou (I),(II),(III) et (IV) ou (I),(II) et (IV) - conformément aux proportions en poids indiquées dans la revendication 1 - et des substances auxiliaires de formulation qui conviennent pour une formulation GE par malaxage, broyage puis malaxage ultérieur,

    (b) en ajoutant ensuite de l'eau à ce prémélange dans un granulateur à lit fluidisé et en le séchant ensuite à une température d'arrivée de l'air de 50-90 °C jusqu'à une température du produit de 30-60 °C puis

    (c) en isolant par tamisage le produit granulé désiré (avec des grosseurs de grain comprises entre 200 et 1500 μm), en séparant le déclassé inférieur (< 200 μm) et le déclassé supérieur (> 1500 μm).

11. Utilisation des formulations solides prêtes à l'emploi suivant les revendications 1 à 9 comme herbicides.

12. Utilisation des formulations solides prêtes à l'emploi suivant la revendication 11 comme herbicides sélectifs pour les cultures de betterave.